# EUROPEAN PATENT APPLICATION

(11) **EP 3 479 679 A1**
(43) Date of publication of application: **08.05.2019**
(21) Application number: 18204703.5
(22) Date of filing: 06.11.2018
(51) Int. Cl.: A01G 9/02, A01G 9/029, A01G 9/00

(54) **PLANT TRAY, AND METHOD FOR FORMING A PLANT TRAY**

(30) Priority: 06.11.2017 NL 2019855
(71) Applicant: Houdstermaatschappij Modiform B.V., 3831 KA Leusden (NL)
(72) Inventor: Smal, Gerardus Hendrikus, 3831 KA Leusden (NL)
(74) Representative: V.O.

(57) **Abstract**

The present disclosure relates to a plant tray comprising a main tray portion defining at least one and preferably multiple plant compartments for receiving a plant, for instance a potted plant, therein. Said plant tray further comprises at least one label support for receiving a label, in particular a label formed by a sticker to be adhered to said label support, wherein said label support is hingedly connected to the main tray portion of the plant tray. In particular, said main tray portion and said label support can be integrally thermoformed from a sheet of thermoplastic material. Additional or alternatively, a fold line for hinging the label support with respect to the main tray portion may be formed by cutting an interrupted cut line, for instance simultaneously with cutting residual material from the formed plant tray.

## Description

The invention relates to a plant tray, suitable and intended for plants, seedlings and/or other crop.

Such trays, often thermoformed from a sheet of thermoplastic material, are known. Such a tray usually comprises multiple, for instance six, plant compartments for receiving a plant, for example a potted plant, therein.

These known trays are for example utilized for holding plants or the like, such as planted bulbs, seedlings and similar crop, for instance during display of said plants or the like, for instance at a flower shop, supermarket, garden centre or other retailer. Additionally, or alternatively, the plant trays can be used during transport, for example from a grower, an auction-mart, a wholesale business or a retailer to an auction-mart, a wholesale business, a retailer or a consumer. For instance, a plant tray filled with plant pots holding plants may be at display in a store. In order to provide a potential buyer with information, often a pre-printed stick-in label, comprising the name, retail price and/or other information about the plant, is stuck into plant substrate held in the plant pot. It is noted that such stick-in label is not always pre-printed and sometimes may be free of information, and may actually be a stick-in label support which still has to be provided with a label, for instance by the retailer. Further, it is noted that a consumer may buy that set of, for instance six, plants each held accommodated in a respective plant compartment of the plant tray, and may bring the plants home in said tray, for instance in order to plant them out in his garden. In order to facilitate transport, such trays are often provided with a carrying strap.

An object of the present disclosure is to provide an alternative plant tray, especially an alternative plant tray alleviating or solving at least one of the disadvantages of a conventional plant tray. In embodiments, the present disclosure may provide an alternative plant tray being provided with a label, or at least a label support onto which a label can be attached.

In a first aspect, the present disclosure provides for a plant tray, comprising a main tray portion defining at least one and preferably multiple plant compartments for receiving a plant, for instance a potted plant, therein, said plant tray further comprising at least one label support for supporting a label, in particular a label formed by a sticker to be adhered to said label support, wherein said label support is hingedly connected to the main tray portion of the plant tray. In particular, said main tray portion and said label support can be integrally thermoformed from a sheet of thermoplastic material. Additional or alternatively, a fold line for hinging the label support with respect to the main tray portion may be formed by cutting an interrupted cut line, in particular interrupted punch line, for instance simultaneously with cutting or punching residual material from the formed plant tray.

In a further aspect, the present disclosure provides for a method for forming a plant tray, comprising a step of integrally forming, in particular thermoforming, a label support and a main tray portion that defines at least one plant compartment, and further comprising a step of pivoting the label support from its initial position in which it was formed integrally with the main tray portion towards a further position, in particular a further position in which the label support and/or a label support surface defined by said label support extends in a relatively steep orientation with respect to the orientation in the initial position of the label support.

By making the label support, which may for instance hold a thereto adhered label sticker, as an integral formed part of the plant tray that is pivotably connected to the main portion of said plant tray, it can be made relatively simple to provide a plant tray having a label, or at least having a label support, for instance as no separate parts need to be used. By making the label support pivotable, it can be formed in a first position, and can be used in a second position. As a result, it can be facilitated that the plant tray's main portion and the label support can be made using a relatively simple mould, in particular in a single thermoforming step, when the label support is in another position than when it is used as a label support when the plant tray is at display in a shop. Subsequently to forming the tray's main portion and the integrated label support, the label support may pivot towards another orientation. This may for instance facilitate that the label support can have a rather complicated design which could not be simply thermoformed when the final mutual orientation between tray and label support would be the same as their mutual orientation when the label support and the plant tray are integrally formed. For example, after pivoting the label support with respect to the main tray portion to which it is hingedly attached, cavities in the label support may have an axial direction which no longer extends substantially parallel with axial directions of cavities formed in the main tray portion, which would not, or at least not easily, have been possible if the main tray portion and the label support had to be integrally formed in such final mutual orientation. Further, it is noted that integrating the label support and the plant tray may for instance facilitate simplifying logistics, and/or may for instance facilitate limiting and/or simplifying assembling actions. Additionally or alternatively, it may counteract that a plant tray is missing a label unintentionally, and/or that a malicious customer switches the label with a label of a relatively low-priced product.

Advantageous embodiments according to the invention are described in the appended claims.

By way of non-limiting examples only, embodiments of the present invention will now be described with reference to the accompanying figures in which:
Fig. 1 shows a schematic perspective view of a first embodiment of a plant tray according to an aspect of the invention in its original position;
Fig. 2 shows a schematic perspective view of the plant tray of Fig. 1 in a second position;
Fig. 3 shows a schematic perspective view of the plant tray shown in Fig. 1 and Fig. 2, wherein a label is provided on a label support of said tray;
Fig. 4 shows a schematic perspective view of a second embodiment of a plant tray according to an aspect of the invention in its original position;
Fig. 5 shows a schematic perspective view of the plant tray of Fig. 4 in a second position; and
Fig. 6 shows a schematic perspective view of the plant tray shown in Fig. 4 and Fig. 5, wherein a label is provided on a label support of said tray.

It is noted that the figures show merely preferred embodiments according to the invention. In the figures, the same or similar reference signs or numbers refer to equal or corresponding parts.

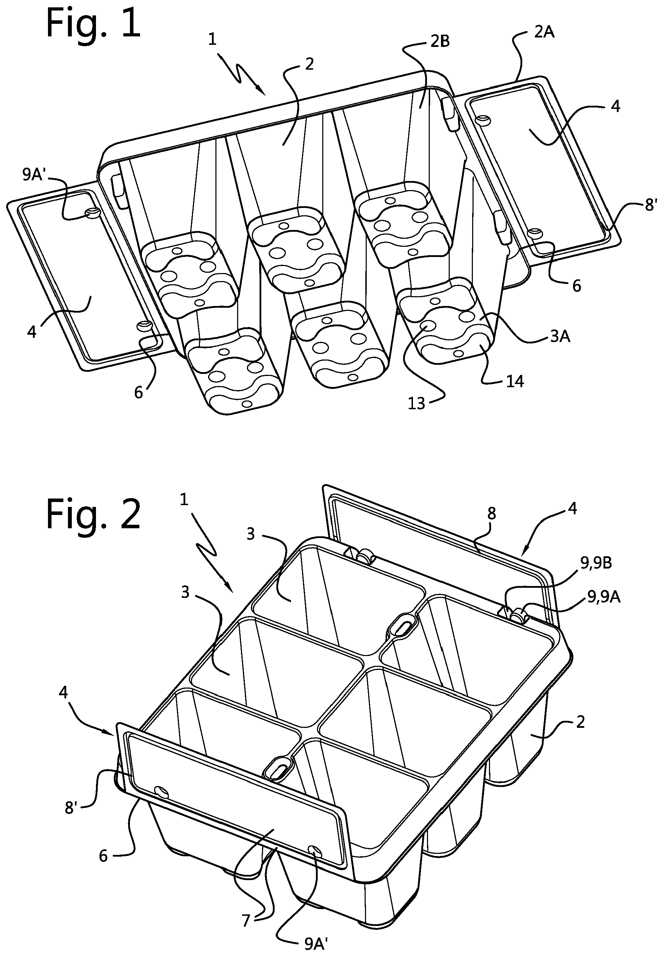

Figure 1 and Figure 2 each schematically show a first and a second embodiment, respectively, of a plant tray 1. The plant tray 1 comprises a main tray portion 2 which, in the shown embodiments, defines six plant compartments 3 for receiving a plant. In alternative embodiments, the main tray portion 2 may define another number of plant compartments 3, for instance one plant compartment, and preferably multiple plant compartments 3, such as for instance two, four, seven, eight, nine, ten, twelve, fifteen, eighteen, twenty or twenty-four plant compartments. It is noted that the plant (not shown) to be received in the respective plant compartment 3 may be located in a plant pot (not shown) which may contain plant substrate, and that said plant may be placed into the compartment 3 by placing said plant pot into the plant compartment 3. Alternatively, plant substrate may be accommodated directly by the plant compartment 3, e.g. without having a plant pot being located between an inner side wall of the plant compartment 3 and the plant substrate. It will of course be appreciated that the plant does not need to be received completely in the plant compartment, as for instance at least a relatively large part of a plant protruding from the plant substrate may be located outside, in particular above, the plant compartment 3.

The plant compartment 3, which thus may accommodate a plant, for instance a potted plant, may be formed as a cavity 3, in particular a cavity defining a bottom and one or more side walls, which cavity 3 preferably is substantially open at its top side. The tray 1, in particular a main tray portion 2 thereof, may for example be suitable and/or intended to be utilized for holding plants or the like. For example, the tray may house plants, planted bulbs, seedlings or other crop, for instance during display thereof, in particular in a flower shop, supermarket, garden centre or other retailer, and/or during transport, for example from a grower, an auction-mart, a wholesale business or a retailer to an auction-mart, a wholesale business, a retailer or a consumer.

In the two shown embodiments, the plant tray 1 further comprises two label supports 4. However, in alternative embodiments, the plant tray 1 may comprise another number of label supports 4, for instance a single label support 4, three label supports 4 or four label supports 4.

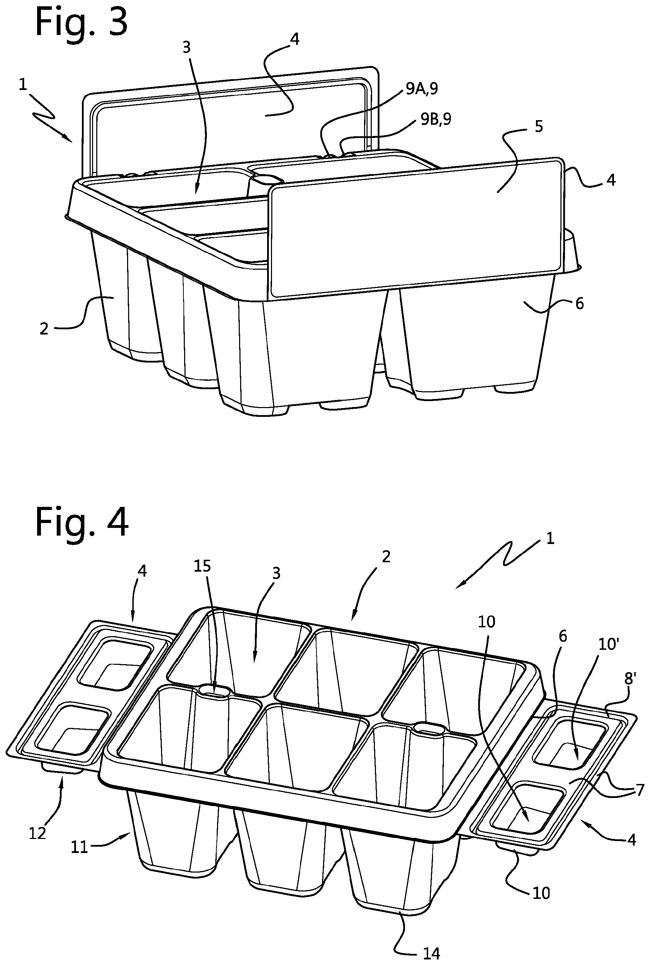

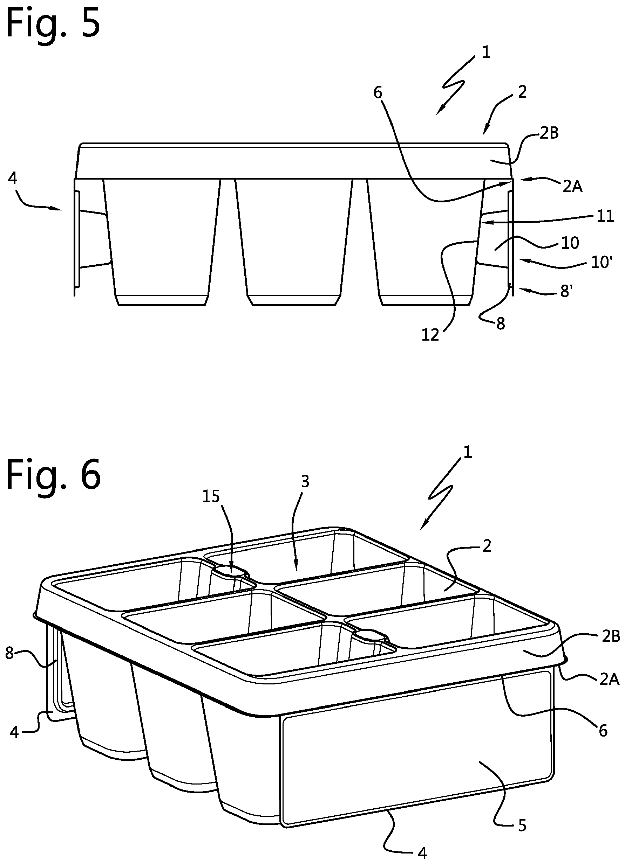

The label support 4 is for supporting a label 5, and may receive a label 5, as can be seen in Figures 3 and 6 which show the plant trays 1 of Figure 1 and Figure 4, respectively, in a further position of said respective tray 1 and being provided with said label 5. The label 5 may be arranged to provide a potential buyer with information (not shown) about one or more plants held by said plant tray 1, for example information regarding the name, the colour, planting and/or caring instructions, the retail price, and/or other information about the plant. In the shown embodiments, the labels 5 are formed by stickers 5 that can be adhered to the label supports 4. However, in alternative embodiments, the label 5 may be provided onto the label support 4 in a different manner. For example, the label 5 may be snap-fitted onto the label support 4, or may be attached by means of ultrasonic welding, gluing, stapling and/or any other suitable means. As another example, the label 5 may be directly printed onto the label support 4, for instance after forming the label support 4 and the main tray portion 2 from a sheet of plastic material. Alternatively, the label 5 may be printed, at least partly, onto the plastic material before the label support 4 and/or the main tray portion 2 is formed from a sheet of plastic material. It is appreciated that in the context of the present disclosure the label 5 and the label support 4 may thus be integrated with each other, and that in the context of the present disclosure, at least in aspects, a label support for supporting a label, may be integrally formed with said label, which may include that the information is provided in or on the label support by means of printing, embossing, cutting, in particular punching and/or other means.

It is noted that the label support 4 may be arranged to define a label support surface 7 onto which the label 5 can installed, for instance by adhering, snap fitting or printing the label onto the label support. For instance in order to allow that a sticker 5 can be relatively easily affixed to said label support surface 7 in a substantially wrinkle-free manner, said support surface 7 may be a single curved surface, or may preferably even be a substantially flat label support surface 7, as is the case in the shown exemplary embodiments.

Advantageously, the main tray portion 2 and the at least one label support 4 can be integrally formed, in particular by integrally thermoforming, more in particular by vacuum forming, them. Additionally, or alternatively, the main tray portion 2 and the one or multiple label supports 4 may be made from a plastic material, in particular a thermoplastic material, such as for instance polystyrene material or any other suitable material.

According to an aspect of the present disclosure, the label support 4 is hingedly connected to the main tray portion 2, for example at an upper side of said main tray portion 2. In embodiments, the label support 4 can be hingedly connected to a side edge 2A of the main tray portion 2, in particular a side edge 2A formed by flange 2B, more in particular a side edge 2A formed by a flange 2B located at an upper end of the main tray portion 2.

Advantageously, said label support 4 may be connected to the tray's main portion 2 along a fold line 6, which may be a preformed fold line 6, in particular a fold line 6 formed by an interrupted cut line 6, in particular an interrupted punch line 6 or interrupted blank line 6. For example in case the plant tray 1 is formed by means of thermoforming the tray 1 from a heated plastic sheet by means of a mould, the fold line 6 for hinging the label support 4 with respect to the main tray portion 2 may be formed by cutting such interrupted cut line 6, in particular simultaneously with trimming residual material from the formed plant tray 1. However, the skilled person will understand that a hinge, in particular formed by a preformed fold line 6, may be formed otherwise, for instance by means of a living hinge, which for example may be formed by means of an additional mould element, which can cooperate with a main mould element for thermoforming the plant tray's main portion 2 and label support 4, which additional mould element may for instance be integrated with a pressure box and/or clamps for clamping the sheet of plastic material to be formed into a plant tray 1.

It is noted that, in embodiments, such as for instance in the shown embodiments, the label support surface 7 defined by the label support 4 may be interrupted, for instance such that the back side of a sticker 5 or other label 5 may not be entirely supported by said support surface 7. Such interruptions 8', 9', 10' may for instance be due to the provision of one or multiple reinforcement ridges 8 for reinforcing the label support 4, the provision of one or multiple connectors or connector elements 9 for facilitating locking the label support 4, in particular a connector element 9 formed as a snap-fit component 9A for forming a snap-fit connection, and/or the provision of a support structure 10 defining a stop surface 12 for limiting the extent to which the label support 4 can be hinged.

Advantageously, the at least one label support 4 can be hingeable from an initial position towards a second position. For example, the first position may be a position in which the plant tray 1 may be formed, in particular thermoformed, whereas the second position may be a position in which the tray 1 may be used, for example during display of plants in a shop.

Additionally or alternatively, such as for instance shown in Fig. 1 and Fig. 4, in the initial position, the label support 4 and/or the support surface 7 may extend in a relatively flat orientation, whereas said label support 4 and/or said support surface 7 may extend in a relatively steep orientation in the second position. In the first position, the label support 4 and/or the support surface 7 may for example extend substantially horizontally, and/or substantially parallel with a bottom side of the plant tray 1, in particular a bottom side of the plant tray's main portion 2, and/or substantially parallel with a top side of the plant tray 1, in particular a top side of the plant tray's main portion 2. In embodiments, in the second position, the label support 4 and/or the support surface 7 may example extend relatively upright, for instance substantially vertically.

It is noted that, in embodiments, the plant tray 1 may comprise one or multiple connectors or connector components 9 for locking the label support 4 in the position in which said label support 4 and/or the label support surface 7 extends in its respective relatively steep orientation. Said connectors 9 can during use thereof for instance form a snap-fit connection, in particular a snap-fit connection in which a first snap-fit component 9A provided at the label support 4 cooperates with a second snap-fit component 9B provided at the main tray portion 2, by interlockingly engaging each other. However, one or multiple connectors may be formed otherwise in alternative embodiments.

In embodiments, such as for instance the embodiments shown in Figures 4-6, the plant tray 1 may comprise cooperating stop surfaces 11, 12 for limiting the extent to which the label support 4 can be hinged away from its initial position. For example, the main tray portion 2 may define a first stop surface 11, while the label support 4 may define a corresponding second stop surface 12, which for instance may counteract that the label support surface 7 may be pivoted beyond its desired end or use position.

In order to retain the label support 4 in its second position, end position or use position, it can locked. In embodiments, the second stop surface 12 can thereto be attached on the first stop surface 11 such as to lock the label support 4 in its position in which said label support 4 and/or the label support surface 7 extends in its respective relatively steep orientation. For example, said stop surfaces 11, 12 may be attached to each other by means of adhering or ultrasonic welding.

Furthermore, the plant tray 1 may comprise one or more additional features. For example, the bottom of a plant compartment 3 may be provided with one or more drainage holes 13 for allowing surplus water to exit the plant compartment. Additionally or alternatively, the tray 1, in particular at least one of its one or more plant compartment 3, may be provided with a foot 14, for example to elevate one or multiple drainage holes 13 above a surface on which the plant tray 1 can be positioned during use thereof. As another example, the tray 1, in particular its main portion 2, may be provided with a carrying strap or the like. The tray 1, in particular its main portion 2, may, for instance thereto, comprise one or more apertures 15 or other attachment elements. Said attachment elements may for instance be for cooperation with a corresponding attachment element, which may for instance be located at a respective end of the carrying strap, and/or which may for instance be or comprise an anchor element, which anchor element may for example comprise one or more barbs for anchoring within such an aperture 15.

It will be appreciated that, at least in embodiments, the plant tray 1 may thus be formed by integrally forming, in particular thermoforming, a label support 4 and a main tray portion 2 that defines at least one plant compartment 3. Subsequently, the label support 4 may be pivoted from its initial position in which it was formed integrally with the main tray portion 2 towards a further position, in particular a further position in which the label support 4 and/or a label support surface 7 defined by said label support 4 extends in a relatively steep orientation with respect to the orientation in the initial position of the label support 4.

Additionally, the label support 4 may subsequently or simultaneously be locked in said further position, for example by means of snap-fitting, adhering, supersonic welding, or any other suitable means.

The label support 4, in particular its label support surface 7, if any, may be provided with a label 5, in particular after integrally forming the label support 4 and the main tray portion 2, more in particular after moving the label support 4 to its second or final position. Alternatively, the label support surface 7 may be provided before pivoting the label support 4 to its second position, and/or even before integrally forming the label support 4 and the main tray portion 2, for instance by providing a print onto a plastic sheet from which the tray's main portion 2 and label support 4 are to be formed, especially thermoformed. It will be appreciated that the label support 4 may also be free of any label, for instance in order to deliver unlabelled plant trays 1, in particular containing plants, more in particular potted plants, to a retailer, which retailer may provide the labels 5 himself.

It is noted that for the purpose of clarity and a concise description features are described herein as part of the same or separate embodiments, however, it will be appreciated that the scope of the invention may include embodiments having combinations of all or some of the features described.

Further, it is noted that the invention is not restricted to the embodiments described herein. It will be understood that many variants are possible.

For example, the shown plant trays have a substantially rectangular shape, but may have another shape, such as a substantially square, substantially triangular, substantially oval or substantially circular shape in alternative embodiments.

Such and other variants will be apparent for the person skilled in the art and are considered to lie within the scope of the invention as formulated in the following claims.

## Claims

1. Plant tray, comprising:
a main tray portion defining at least one and preferably multiple plant compartments for receiving a plant, for instance a potted plant, therein; and
at least one label support for supporting a label, in particular a label formed by a sticker to be adhered to said label support, wherein the label support is hingedly connected to the main tray portion.

2. Plant tray according to claim 1, wherein the main tray portion and the at least one label support are integrally formed.

3. Plant tray according to claim 1 or 2, wherein the main tray portion and the at least one label support are made from a plastic material, in particular a thermoplastic material.

4. Plant tray according to any one of the preceding claims, wherein the main tray portion and the at least one label support are thermoformed and/or vacuum formed.

5. Plant tray according to any one of the preceding claims, wherein the at least one label support defines a label support surface onto which a label can installed.

6. Plant tray according to any one of the preceding claims, wherein the at least one label support is hingeable from an initial position in which it extends in a relatively flat orientation into a second position in which it extends in a relatively steep orientation.

7. Plant tray according to claim 5, wherein the at least one label support is hingeable from an initial position in which the label support surface extends in a relatively flat orientation into a further position in which said label support surface extends in a relatively steep orientation.

8. Plant tray according to claim 6 or 7, wherein the plant tray comprises one or multiple connectors for locking the label support in the position in which said label support and/or the label support surface extends in its respective relatively steep orientation.

9. Plant tray according to claim 8, wherein one or multiple of the one or more connectors is/are formed as a snap-fit connection component, in particular wherein the plant tray comprises a first snap-fit component provided at the label support and said plant tray further comprises a second snap-fit component interlockingly engageable with said first snap-fit component and provided at the main tray portion.

10. Plant tray according to any one of claims 6-9, wherein the main tray portion defines a first stop surface, and the label support defines a corresponding second stop surface, said stop surfaces being able to limit the extent to which the label support can be hinged away from its initial position.

11. Plant tray according to claim 10, wherein the second stop surface is attached on the first stop surface such as to lock the label support in its position in which said label support and/or the label support surface extends in its respective relatively steep orientation.

12. Plant tray according to any one of the preceding claims, wherein the label support is hingedly connected to the main tray portion at an upper side of the main tray portion.

13. Plant tray according to any one of the preceding claims, wherein the label support is hingedly connected to a side edge of the main tray portion, in particular a side edge formed by flange, more in particular a side edge formed by a flange located in an upper end region of the main tray portion.

14. Plant tray according to any one of the preceding claims, wherein the label support is hingedly connected to the main tray portion about a preformed fold line, in particular a preformed fold line formed by an interrupted cut line, more in particular an interrupted punch line.

15. Plant tray according to any one of the preceding claims, wherein the label support is provided with a label, in particular a label adhered onto said label support.

16. Method for forming a plant tray, comprising the steps of:
integrally forming, in particular thermoforming, a label support and a main tray portion that defines at least one plant compartment; and
pivoting the label support from its initial position in which it was formed integrally with the main tray portion towards a further position, in particular a further position in which the label support and/or a label support surface defined by said label support extends in a relatively steep orientation with respect to its respective orientation in the initial position of the label support.
